# EUROPEAN PATENT APPLICATION

(11) **EP 4 840 894 A1**
(43) Date of publication of application: **18.11.2026**
(21) Application number: 25176582.2
(22) Date of filing: 15.05.2025
(51) Int. Cl.: C08G 59/24, C08G 59/32, C08G 59/42

(54) **TWO COMPONENT (2K) COMPOSITION AND MOLDED PRODUCTS OBTAINED THEREFROM**

(71) Applicant: Henkel AG & Co. KGaA, 40589 Düsseldorf (DE)
(72) Inventor: Shibutani, Kazushi, 40667 Meerbusch (DE); Niegemeier, Andreas, 40764 Langenfeld (DE)

(57) **Abstract**

A two component (2K) composition comprising:
a first component comprising:
a1) at least one cycloaliphatic epoxide compound; and,
optionally a2) at least one elastomer modified epoxy resin; and,

a second component comprising:
b) at least one cyclic anhydride compound; and,
optionally c) at least one accelerator,

wherein the composition further comprises:
d) black pigment consisting of at least one organic compound; and,
e) toughener,
further wherein the composition is characterized in that the molar ratio of anhydride groups [-C(O)-O-C(O)-] to epoxide groups is from 0.5:1 to 1.5:1, for example from 0.8:1 to 1.2:1. The composition, when cured, finds utility in the formation of molded articles of manufacture.

## Description

### FIELD OF THE INVENTION

The present disclosure is directed to a two component (2K) composition based on epoxide compounds and anhydride curatives, which composition further comprises a particulate organic pigmentary compound and particulate tougheners. The composition, when cured, finds utility in the formation of molded articles of manufacture.

### BACKGROUND TO THE INVENTION

The lightweight construction of automobiles is becoming increasingly important in the automotive industry, with molded parts made of carbon fiber reinforced plastics material (CFRP) being in particular demand. In order to be installed in loci - such as tire rims - which are exposed to high temperatures during vehicular operation, the cured matrix resins of such carbon fiber reinforced plastics material (CFRP) need either to be heat tolerant *per se* or to be coated with a heat-protective lacquer. As the latter option would render more complex the production of the molded parts, attention has been directed to high glass transition temperatures (T_{g}) matrix resins derived from epoxide-anhydride curing systems. However, such epoxide-anhydride curing systems can be deficient in their impact toughness with respect to vehicular use.

In order to increase the impact toughness of these curing systems, flexibilizers or tougheners are usually added to the reactive resin mixtures. However, conventional flexibilizers or tougheners - in the form of CTNB (*carboxyl-terminated butadiene nitrile*) or CSR (*core-shell rubber*) particles - can lower the glass transition temperatures (T_{g}) of the cured resin matrix and can also introduce cloudiness, milkiness or discoloration into the products. Certain authors have therefore sought alternative tougheners or flexibilizers for epoxide-anhydride curing systems.

US Patent No. 8,927,677 B2 (Karunakaran et al.) discloses a curable composition comprising: a liquid epoxy resin; at least one curing agent selected from the group consisting of at least one anhydride, at least one phenolic novolac, at least one amine or a mixture thereof; and, as toughener, at least one poly(propylene oxide) polyol having a number average molecular (Mn) of from 7,000 to 20,000 daltons.

WO2014071576A1 A discloses a curable epoxy resin composition comprising: (a) a cycloaliphatic epoxy resin; (b) an oxazolidone ring-containing epoxy resin; (c) a reaction product of (i) an anhydride compound and (ii) a polyol; and, (d) an anhydride hardener. The polyol of the adduct (c)) may be a polyox(C₂-C₃)alkylene polyol having an equivalent weight of from 20 to 2,500 g/eq. and a nominal functionality of from 2 to 10.

EP3825115A1 (Henkel AG & Co. KGaA) discloses a resin composition comprising at least one epoxy resin component and at least one curing component comprising at least one anhydride curing agent, characterized in that the resin composition further comprises at least one PEO-PPO-PEO triblock copolymer having a molecular weight of at least 6,000 daltons.

Having regard to these citations, the disclosed polyoxyalkylene polymers or the adducts of said polymers - included in the compositions as flexibilizers and / or tougheners - are considered to disperse within the cured resin matrices at such a particle size distribution that their scattering of impinging visible light is minimized: consequently the resin matrices do not appear hazy or milky. Problematically, however, such polyoxyalkylene polymers are hydrophilic and can promote deleterious water-uptake into the cured resin matrices when exposed to moisture.

There is consequently considered to remain a need in the art to develop epoxy-anhydride curing systems which produce cured articles which: possess a high glass transition temperature; possess a high impact toughness; are not hazy, milky or otherwise discolored in appearance; and, have utility in environments which are exposed to both heat and moisture.

### STATEMENT OF THE INVENTION

In accordance with a first aspect of the disclosure, there is provided a two component (2K) composition comprising:
a first component comprising:
   a1) at least one cycloaliphatic epoxide compound; and,
   optionally a2) at least one elastomer modified epoxy resin; and,
a second component comprising:
   b) at least one cyclic anhydride compound; and,
   optionally c) at least one accelerator,

wherein the composition further comprises:
   d) black pigment consisting of at least one organic compound; and,
   e) toughener,
further wherein the composition is characterized in that the molar ratio of anhydride groups [-C(O)-O-C(O)-] to epoxide groups is from 0.5:1 to 1.5:1.

For completeness, constituent d) and independently constituent e) of the composition may be included either wholly in the first component, wholly in the second component or partially in each of the first and second components.

In an important embodiment, the two component (2K) composition comprises, based on the total weight of the composition:
from 20 to 50 wt.%, preferably from 20 to 45 wt.% and more preferably from 30 to 45 wt.% of a1) said at least one cycloaliphatic epoxide compound;
from 0 to 10 wt.%, preferably from 0 to 8 wt.% and more preferably from 0 to 5 wt.% of a2) said at least one elastomer modified epoxy resin;
from 20 to 60 wt.%, preferably from 30 to 60 wt.% and more preferably from 40 to 60 wt.% of b) said at least one cyclic anhydride compound;
from 0 to 15 wt.%, preferably from 0.1 to 10 wt.% and more preferably from 0.1 to 5 wt.% of c) said at least one accelerator;
from 0.1 to 10 wt.%, preferably from 0.5 to 10 wt.% and more preferably from 1 to 5 wt.% of d) said black pigment; and,
from 1 to 30 wt.%, such as from 5 to 25 wt.% or from 10 to 20 wt.%, of e) said tougheners,
wherein the composition is characterized in that the molar ratio of anhydride groups [-C(O)-O-C(O)-] to epoxide groups is from 0.5:1 to 1.5:1, for example from 0.8:1 to 1.2:1.

It is preferred that the or each cycloaliphatic epoxide compound of constituent a1) has an epoxide equivalent weight of from 75 to 1000 g/eq., preferably from 100 to 500 g/eq. and more preferably from 100 to 250 g/eq. In an embodiment, constituent a1) comprises at least one cycloaliphatic epoxide compound chosen from: bis-(3,4-epoxycyclohexylmethyl) oxalate; bis-(3,4-epoxy-cyclohexylmethyl) adipate; bis-(3,4-epoxy-6-methylcyclohexylmethyl) adipate; bis-(3,4-epoxycyclohexylmethyl) pimelate; 3,4-epoxycyclohexylmethyl-3,4-epoxycyclohexane carboxylate; bis-(3,4-epoxycyclohexyl) adipate; 3,4-epoxy-1-methylcyclohexylmethyl-3,4-epoxy-1-methylcyclohexane carboxylate; and, mixtures thereof.

Where the first component further comprises constituent a2), it is preferred that the or each elastomer modified epoxy resin thereof has an epoxide equivalent weight of from 200 to 2500 g/eq., preferably from 200 to 500 g/eq.

In an embodiment, constituent b) said at least one cyclic anhydride compound is chosen from: hexahydrophthalic anhydride (HHPA); tetrahydrophthalic anhydride (THPA); methyltetrahydrophthalic anhydride (MTHPA); methylhexahydrophthalic anhydride (MHHPA); phthalic anhydride; trimellitic anhydride; and, mixtures thereof.

In that embodiment of the disclosure wherein the second component further comprises constituent c), it is preferred that said at least one accelerator is chosen from imidazole compounds and/or quaternary phosphonium compounds. Preferably said at least one accelerator, if an imidazole compound, is chosen from: imidazole; 1-methylimidazole; 2-methylimidazole; 2-ethylimidazole; 2-ethyl-4-methylimidazole; 2-undecylimidazole; 2-heptadecylimidazole; 2-phenylimidazole; 2-phenyl-4-methylimidazole; 2-phenyl-4,5-dihydroxymethylimidazole; 2-phenyl-4-methyl-5-hydroxymethylimidazole; 1-cyanoethyl-2-undecylimidazole; 1-cyanoethyl-2-ethyl-4-imidazole; 2-phenylimidazole; 1-benzyl-2-phenylimidazole; benzimidazole; 2-phenyl-4,5-dihydroxymethylimidazole; 2,3-dihydro-1H-pyrrolo [1,2-a] benzimidazole; 1-vinylimidazole N-(3-aminopropyl)imidazole; and, mixtures thereof. Preferably said at least one accelerator, if a quaternary phosphonium compounds, is chosen from trihexyl (tetradecyl) phosphonium chloride, tributylethyl phosphonium diethylphosphate or mixtures thereof.

It is preferred that the composition is substantially free of carbon black. Independently of, or additional to, this consideration, it is preferred constituent d) said black pigment is characterized by: i) a median volume particle diameter (D_{V}50), as determined by dynamic light scattering, of from 10 to 500 nm; and / or, ii) a surface area, as determined by Brunauer Emmett Teller (BET) nitrogen adsorption method, of from 10 to 500 m²/g.

In an important embodiment, constituent e) of the composition comprises or consists of core shell rubber particles. It is preferred that such included core-shell rubber particles have a median volume particle size (D_{V}50) of from 10 to 300 nm, as measured via dynamic light scattering.

The organic pigmentary compounds can be combined with conventional tougheners to provide a composition which, when cured, does not suffer from milkiness, haziness or discoloration. Further, the typical constitution by weight concentration of organic pigmentary compounds does not deleteriously increase the viscosity of the composition: the compositions can thus viably be used in standard injection systems for the manufacture of molded products, including carbon-fiber reinforced plastics. Moreover, hydrophobic tougheners can be incorporated into the composition such that water uptake of the cured resin matrix can be minimized.

In accordance with a second aspect of the present disclosure, there is provided a method for producing a cured composition comprising the steps of: i) providing a two-component (2K) composition as defined herein above and in the appended claims; and, ii) curing the composition.

In an embodiment of this method, step (i) further comprises introducing the two-component (2K) composition into a mold, in which mold are disposed either: fibers; or, a semi-finished fiber product chosen from a pre-woven, a preform or a combination thereof. Independently of, or additional to this supplementary step, it is preferred that step ii) comprises heating the composition at a temperature in the range of from 20°C to 250°C for a duration of from 1 to 60 minutes.

The present disclosure still further provides for a cured composition obtained in accordance with the method defined herein above and in the appended claims. The cured composition is desirably characterized by: a glass transition temperature (T_{g}) of at least 180°C, as determined by dynamic mechanical thermal analysis (DMTA) in accordance with ASTM E1640; and, a fracture toughness of at least 0.8 MPa·m^{1/2} as determined in accordance with standard ISO 13586: 2018. The cured composition may, for instance, possess: a glass transition temperature of from 180 to 300°C, such as from 200 to 250°C; and, a fracture toughness of from 0.8 to 2.0 MPa·m^{1/2} such as from 1.0 to 1.6 MPa·m^{1/2}.

Where the aspects of the disclosure are described herein as having certain embodiments, any one or more of those embodiments can be implemented in or combined with any one of the further embodiments, even if that combination is not explicitly described. Expressed differently, the described embodiments are not mutually exclusive, and permutations thereof remain within the scope of this disclosure.

### DEFINITIONS

The terms "*comprising*", "*comprises*" and "*comprised o*f" as used herein are synonymous with "*including*", "*includes*", "*containing*" or "*contains*", and are inclusive or open-ended and do not exclude additional, non-recited members, elements or method steps.

As used herein, the term "*consisting of*" excludes any element, ingredient, member or method step not specified. For completeness, the term "*comprising*" encompasses "*consisting of*"*.*

The words "*preferred*", "*preferably*", "*desirably*" and "*particularly*" are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

The word "*exemplary*" is used herein to mean serving as an example, instance, or illustration. Any aspect or design described herein as "*exemplary*" is not necessarily to be construed as preferred or advantageous over other aspects or designs. Rather, use of the word exemplary is intended to present concepts in a concrete fashion.

As used throughout this application, the word "*may*" is used in a permissive sense - that is meaning to have the potential to - rather than in the mandatory sense.

The term "*plurality*" as used herein is defined as two or more than two.

When amounts, concentrations, dimensions and other parameters are expressed in the form of a range, a preferable range, an upper limit value, a lower limit value or preferable upper and lower limit values, it should be understood that any ranges obtainable by combining any upper limit or preferable value with any lower limit or preferable value are also specifically disclosed, irrespective of whether the obtained ranges are clearly mentioned in the context.

Further, in accordance with standard understanding, a weight range represented as being "*from 0 to x*" specifically includes 0 wt.%: the ingredient defined by said range may be absent from the material or may be present in the material in an amount up to x wt.%.

The molecular weights referred to in this specification can be measured with gel permeation chromatography (GPC) using polystyrene calibration standards, such as is done according to ASTM 3536.

Viscosities of the compositions described herein are, unless otherwise stipulated, measured using the Brookfield Viscometer, Model RVT at standard conditions of 20°C and 50% Relative Humidity (RH). The viscometer is calibrated using silicone oils of known viscosities, which vary from 5,000 cps to 50,000 cps. A set of RV spindles that attach to the viscometer are used for the calibration. Measurements of the compositions are done using the No. 6 spindle at a speed of 20 revolutions per minute for 1 minute until the viscometer equilibrates. The viscosity corresponding to the equilibrium reading is then calculated using the calibration.

Where mentioned, a calculated glass transition temperature ("T_{g}") of a polymer or co-polymer is that temperature which may be calculated by using the Fox equation (T. G. Fox, Bull. Am. Physics Soc., Volume 1, Issue No. 3, page 123(1956)). The glass transition temperatures of certain homo-polymers may be found in the published literature.

The actual glass transition temperature (T_{g}) of a polymer can be determined by differential scanning calorimetry (DSC) or dynamic mechanical thermal analysis (DMTA). The use of DSC to determine T_{g} is described by B. Cassel and M. P. DiVito in "Use of DSC To Obtain Accurate Thermodynamic and Kinetic Data", American Laboratory, January 1994, pp 14-19, and by B. Wunderlich in Thermal Analysis, Academic Press, Inc., 1990. The determination of glass transition temperatures (T_{g}) by dynamic mechanical thermal analysis (DMTA) may be performed in accordance with ASTM E1640: *DMA Testing: Standard Test Method for Assignment of the Glass Transition Temperature By Dynamic Mechanical Analysis.*

As used herein, room temperature is 23°C plus or minus 2°C. As used herein, "*ambient conditions*" means the temperature and pressure of the surroundings in which either the composition or the molded article are located.

Unless otherwise stated, the term "*particle size*" refers to the largest axis of the particle. In the case of a generally spherical particle, the largest axis is the diameter.

As used herein, by "*Dv50 particle size*" is meant that the particle size distribution is such that at least 50% of the particles by volume have a particle size diameter of less than the specified value. Unless otherwise stated, that particle size is determined by dynamic light scattering (DLS).

As used herein, the term "*solids content*" refers to the percent by weight of non-volatile components in a composition. The solids content may be determined as the inverse value of the volatile content obtained in accordance with ASTM D2369 Standard Test Method for Volatile Content of Coatings.

"*Two-component (2K) compositions*" in the context of the present disclosure are understood to be compositions in which a first component (A) and a second component (B) must be stored in separate vessels because of their (high) reactivity. The two components are mixed only shortly before application and then react, typically without additional activation, with bond formation and thereby formation of a polymeric network. Herein higher temperatures may be applied in order to accelerate the cross-linking reaction.

As used herein, "*curing*" of the two-component (2K) composition refers to the formation of a matrix, where applicable on a substrate surface or within a mold: whilst the curing will include cross-linking reaction(s), it can further encompasses: evaporation of any solvents present in the composition (*drying*); and, coalescence of the particulate or dispersed phase of the composition. Such curing may be performed under ambient conditions or by deliberate exposure to heat and / or irradiation. The degree of cure may be partial or complete: the degree (%) of cross-linking can, in particular, be determined by dynamic mechanical thermal analysis (DMTA) using a Polymer Laboratories MK III DMTA Analyzer under an inert gas atmosphere.

The term "*cure accelerator*" is intended herein to encompass any material which is a cure accelerator (or curing agent) for the reactive functional compounds disclosed herein. The accelerator may be of either the catalytic or reactive type.

As used herein, an "*active hydrogen compound*" is a compound that includes at least one hydrogen atom that may be readily dissociated in an aqueous environment. Preferably, the hydrogen atom is attached to a nitrogen atom, an oxygen atom, a phosphorous atom, or a sulfur atom.

As used herein, the term "*monomer*" refers to a substance that can undergo a polymerization reaction to contribute constitutional units to the chemical structure of a polymer. The term "*monofunctional*", as used herein, refers to the possession of one polymerizable moiety. The term "*polyfunctional*", as used herein, refers to the possession of more than one polymerizable moiety.

As used herein, the term "*epoxide*" denotes a compound characterized by the presence of at least one cyclic ether group, namely one wherein an ether oxygen atom is attached to two adjacent carbon atoms thereby forming a cyclic structure. The term is intended to encompass monoepoxide compounds, polyepoxide compounds (having two or more epoxide groups) and epoxide terminated prepolymers. The term "*monoepoxide compound*" is meant to denote epoxide compounds having one epoxy group. The term "*polyepoxide compound*" is meant to denote epoxide compounds having at least two epoxy groups. The term "*diepoxide compound*" is meant to denote epoxide compounds having two epoxy groups.

The epoxide may be unsubstituted but may also be inertly substituted. Exemplary inert substituents include chlorine, bromine, fluorine and phenyl.

As employed herein a "*primary amino group*" refers to an NH₂ group that is attached to an organic radical, and a "*secondary amino group*" refers to an NH group that is attached to two organic radicals, which may also together be part of a ring. The term "*tertiary amine*" thus references a nitrogen bearing moiety of which a nitrogen atom is not bound to a hydrogen atom. Where used, the term "*amine hydrogen*" refers to the hydrogen atoms of primary and secondary amino groups.

As used herein, the term "*equivalent (eq.")* relates, as is usual in chemical notation, to the relative number of reactive groups present in the reaction. The term "*equivalent weight*" as used herein refers to the molecular weight divided by the number of a function concerned. As such, "*epoxy equivalent weight*" (EEW) means the weight of resin, in grams, that contains one equivalent of epoxy.

Water, for use as a (co-)solvent or diluent herein, is intended to mean water of low solids content as would be understood by a person of ordinary skill in the art. The water may, for instance, be distilled water, demineralized water, deionized water, reverse osmosis water, boiler condensate water, or ultra-filtration water. Tap water may be tolerated in certain circumstances.

As used herein "*solvents*" are substances capable of dissolving another substance to form a uniform solution; during dissolution neither the solvent nor the dissolved substance undergoes a chemical change. Solvents may either be polar or non-polar.

As used herein, "*polyol*" refers to any compound comprising two or more hydroxyl groups: the term is thus intended to encompass diols, triols and compounds containing four or more -OH groups.

As used herein, "*C₁-Cₙ alkyl*" group refers to a monovalent group that contains 1 to n carbons atoms, that is a radical of an alkane and includes straight-chain and branched organic groups. As such, a "*C₁-C₄ alkyl*" group refers to a monovalent group that contains from 1 to 4 carbons atoms, that is a radical of an alkane and includes straight-chain and branched organic groups. Examples of alkyl groups include, but are not limited to: methyl; ethyl; propyl; isopropyl; n-butyl; isobutyl; sec-butyl; and, tert-butyl. In the present disclosure, such alkyl groups may be unsubstituted or may be substituted with one or more halogen. Where applicable for a given moiety (R), a tolerance for one or more non-halogen substituents within an alkyl group will be noted in the specification.

The terms "*alkylene group*" refers to a group that are radicals of a linear, branched or cyclic alkane, which group may be substituted or unsubstituted and may optionally be interrupted by at least one heteroatom.

The term "*C₁-Cₙ hydroxyalkyl*" as used herein refers to an HO-(alkyl) group having from 1 to n carbon atoms, where the point of attachment of the substituent is through the oxygen-atom and the alkyl group is as defined above.

An "*alkoxy group*" refers to a monovalent group represented by -OA where A is an alkyl group: non-limiting examples thereof are a methoxy group, an ethoxy group and an iso-propyloxy group. The term "*alkoxylated*" as used herein means comprising at least one alkoxy group.

As used herein, "*C₂-Cₙ alkenyl*" group refers to an aliphatic carbon group that contains 2 to n carbon atoms and at least one double bond disposed in any position. The alkenyl group can be straight chained, branched or cyclic and may optionally be substituted with one or more halogen. Where applicable for a given moiety (R), a tolerance for one or more non-halogen substituents within an alkenyl group will be noted in the specification. The term "*alkenyl*" also encompasses radicals having "cis" and "trans" configurations, or alternatively, "E" and "Z" configurations, as appreciated by those of ordinary skill in the art. Examples of said C₂-C₂₀ alkenyl groups include, but are not limited to: -CH=CH₂; -CH=CHCH₃; -CH₂CH=CH₂; - C(=CH₂)(CH₃); -CH=CHCH₂CH₃; -CH₂CH=CHCH₃; -CH₂CH₂CH=CH₂; -CH=C(CH₃)₂; - CH₂C(=CH₂)(CH₃); -C(=CH₂)CH₂CH₃; -C(CH₃)=CHCH₃; -C(CH₃)CH=CH₂; -CH=CHCH₂CH₂CH₃; - CH₂CH=CHCH₂CH₃, -CH₂CH₂CH=CHCH₃; -CH₂CH₂CH₂CH=CH₂; -C(=CH₂)CH₂CH₂CH₃; - C(CH₃)=CHCH₂CH₃; -CH(CH₃)CH=CHCH, -CH(CH₃)CH₂CH=CH₂; -CH₂CH=C(CH₃)₂; 1-cyclopent-1-enyl; 1-cyclopent-2-enyl; 1-cyclopent-3-enyl; 1-cyclohex-1-enyl; 1-cyclohex-2-enyl; and, 1-cyclohexyl-3-enyl.

The term *"C₃-Cₙ cycloalkyl*" as used herein means an optionally substituted, saturated cyclic hydrocarbon having from 3 to n carbon atoms. In the present disclosure, such cycloalkyl groups may be unsubstituted or may be substituted with one or more halogen. Where applicable for a given moiety (R), a tolerance for one or more non-halogen substituents within a cycloalkyl group will be noted in the specification. Exemplary cycloalkyl groups include cyclopropyl, cyclobutyl, cyclopentyl or cyclohexyl groups.

As used herein, "*C₃-Cₙ cycloalkylene*" means a divalent radical formed by the removal of two hydrogen atoms from one or more rings of a cycloalkyl group having from 3 to 6 carbon atoms.

As used herein, an "*C₆-C₁₈ aryl*" group used alone or as part of a larger moiety - as in "*aralkyl group*" - refers to monocyclic, bicyclic and tricyclic ring systems in which the monocyclic ring system is aromatic or at least one of the rings in a bicyclic or tricyclic ring system is aromatic. The bicyclic and tricyclic ring systems include benzofused 2-3 membered carbocyclic rings. In the present disclosure, such aryl groups may be unsubstituted or may be substituted with one or more halogen. Where applicable for a given moiety (R), a tolerance for one or more non-halogen substituents within an aryl group will be noted in the specification. Exemplary aryl groups include: phenyl; (C₁-C₄)alkylphenyl, such as tolyl and ethylphenyl; indenyl; naphthalenyl, tetrahydronaphthyl, tetrahydroindenyl; tetrahydroanthracenyl; and, anthracenyl.

As used herein, "*alkylaryl*" refers to alkyl-substituted aryl groups and "*substituted alkylaryl*" refers to alkylaryl groups further bearing one or more substituents as set forth above. Further, as used herein "*aralkyl*" means an alkyl group substituted with an aryl radical as defined above.

The term "*hetero*" as used herein refers to groups or moieties containing one or more heteroatoms, such as N, O, Si and S. Thus, for example "*heterocyclic*" refers to cyclic groups having, for example, N, O, Si or S as part of the ring structure. "*Heteroalkyl*", "*heterocycloalkyl*" and "*heteroaryl*" moieties are alkyl, cycloalkyl and aryl groups as defined hereinabove, respectively, containing N, O, Si or S as part of their structure.

The term "*heterocyclyl*" refers to a monovalent chain of carbon and heteroatoms, wherein the heteroatoms are selected from N, O, Si or S, a portion of which, including at least one heteroatom, form a ring.

The term "*substituted*" refers to substitution with at least one suitable substituent. For completeness: the substituents may connect to the specified group or moiety at one or more positions; and, multiple degrees of substitution are allowed unless otherwise stated. Further, the terms "*substitution*" or "*substituted with*" include the implicit proviso that such substitution is in accordance with permitted valence of the substituted atom and the substituent, and that the substitution results in a stable compound that does not spontaneously undergo transformation by, for instance, rearrangement, cyclization or elimination.

The term "*substantially free*" is intended to mean that the constituent, component, compound, moiety, functional group, element, ion or the like is not deliberately added to the subject material and is present, at most, in only trace amounts which will have no (adverse) effect on the desired properties of the material. As regards compositions, an exemplary trace amount is less than 1000 ppm by weight of the composition. The term "*substantially free*" encompasses those embodiments where the specified compound, moiety, functional group, element, ion, or other like component is completely absent from the subject material or is not present in any amount measurable by techniques generally used in the art.

The term "*anhydrous*" as used herein has equivalence to the term "*substantially free of water*"*.* Water is not deliberately added to a given composition and is present, at most, in only trace amounts which will have no (adverse) effect on the desired properties of the composition.

### DETAILED DESCRIPTION

As discussed above, the present disclosure provides a two component (2K) composition comprising:
a first component comprising:
   a1) at least one cycloaliphatic epoxide compound; and,
   optionally a2) at least one elastomer modified epoxy resin; and,
a second component comprising:
   b) at least one cyclic anhydride compound; and,
   optionally c) at least one accelerator,

wherein the composition further comprises:
   d) black pigment consisting of at least one organic compound; and,
   e) toughener,
further wherein the composition is characterized in that the molar ratio of anhydride groups [-C(O)-O-C(O)-] to epoxide groups is from 0.5:1 to 1.5:1.

### a1) Cycloaliphatic Epoxide Compound

The two component (2K) composition of the present disclosure comprises a1) at least one cycloaliphatic epoxide compound. For example, the composition may comprise from 20 to 50 wt.%, from 20 to 45 wt.% or from 30 to 45 wt.% of a1) said at least one cycloaliphatic epoxide compound, based on the weight of the composition. It is preferred that the or each cycloaliphatic epoxide compound has an epoxide equivalent weight of from 75 to 1000 g/eq., for example from 100 to 500 g/eq or from 100 to 250 g/eq.

Exemplary cycloaliphatic monoepoxides having utility in the present disclosure, which may be used alone or in combination, include: glycidyl ethers of cycloaliphatic alcohols, such as cyclohexyl glycidyl ether; cyclohexene oxide; vinylcyclohexene monoxide; (+)-cis-limonene oxide; (+)-cis,trans-limonene oxide; (-)-cis,trans-limonene oxide; cyclooctene oxide; cyclododecene oxide; and, α-pinene oxide.

Further exemplary cycloaliphatic di- and polyepoxides having utility in the present disclosure, which may be used alone or in combination, include compounds which have a saturated hydrocarbon ring having an epoxide oxygen atom bonded to two adjacent carbon atoms of the carbon ring, as shown in the following formula (CE1): 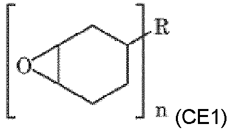 wherein: R is a linking group; and,
n is an integer from 2 to 10.

Cycloaliphatic epoxide compounds according to Formula (CE1) in which n is from 2 to 4, for instance 2 or 3 may be mentioned in particular.

Further examples of suitable cycloaliphatic diepoxides are the epoxides of cycloaliphatic esters of dicarboxylic acids, such as bis-(3,4-epoxycyclohexylmethyl) oxalate, bis-(3,4-epoxycyclohexylmethyl) adipate, bis-(3,4-epoxy-6-methylcyclohexylmethyl) adipate and bis-(3,4-epoxycyclohexylmethyl) pimelate. And additional suitable diepoxides of cycloaliphatic esters are described in US Patent No. 2,750,395.

Still further exemplary cycloaliphatic diepoxides include: 3,4-epoxycyclohexylmethyl-3,4-epoxycyclohexane carboxylate; bis-(3,4-epoxycyclohexyl) adipate; and, 3,4-epoxy-1-methylcyclohexylmethyl-3,4-epoxy-1-methylcyclohexane carboxylate. And additional suitable cycloaliphatic epoxides are in US Patent No. 2,890,194.

In certain embodiments, constituent a1) comprises at least one cycloaliphatic epoxide compound chosen from: bis-(3,4-epoxycyclohexylmethyl) oxalate; bis-(3,4-epoxy-cyclohexylmethyl) adipate; bis-(3,4-epoxy-6-methylcyclohexylmethyl) adipate; bis-(3,4-epoxycyclohexylmethyl) pimelate; 3,4-epoxycyclohexylmethyl-3,4-epoxycyclohexane carboxylate; bis-(3,4-epoxycyclohexyl) adipate; 3,4-epoxy-1-methylcyclohexylmethyl-3,4-epoxy-1-methylcyclohexane carboxylate; and, mixtures thereof.

### a2) Elastomer Modified Epoxy Resin

The two component (2K) composition of the present disclosure may, in certain embodiments, comprise a2) at least one elastomer modified epoxy resin, which resin should desirably have an epoxide equivalent weight of from 200 to 2500 g/eq., for example from 200 to 500 g/eq. Without intention to limit the present disclosure, it is preferred that said elastomer modified epoxy resin a2) constitutes from 0 to 10 wt.%, preferably from 0 to 5 wt.% of the composition.

Elastomer modification of an epoxy resin (hereinafter denoted E1) may be conducted by any suitable method known to the skilled artisan but it should generally be performed through a catalyzed addition reaction between the functional groups of the modifier (hereinafter denoted M1) and the oxirane groups of the epoxy resin (E1). Such an addition reaction may be conducted in a suitable solvent and under at least one of following conditions: i) a temperature of from 40°C to 200°C; ii) a reaction duration of from 0.5 to 5 hours; and, iii) catalysis. Exemplary catalysts include: tertiary amine catalysts, such as tributylamine; quaternary ammonium salts, such as tetrabutylammonium chloride; tertiary phosphates, such as triphenylphosphate; quaternary phosphonium salts, such as ethyltriphenyl phosphonium iodide (ETPPI); metal salts, such as AMC-2 (a chromium octoate salt); and, combinations of these catalysts where staged addition reactions are effected.

The epoxy resin (E1) to be modified has a 1,2-epoxy equivalency of greater than one and preferably of at least 2. The epoxy resin (E1) may be linear or branched, saturated or unsaturated, aliphatic, cycloaliphatic, aromatic or heterocyclic. And as examples of epoxy resins (E1), there may be mentioned: polyglycidyl ethers of polyhydric compounds; brominated epoxies; epoxy novolacs or similar polyhydroxyphenol resins; polyglycidyl ethers of glycols or polyglycols; and, polyglycidyl esters of polycarboxylic acids. A preference may be acknowledged for the use of a polyglycidyl ether of a polyhydric phenol as said epoxy resin (E1).

The functionalized modifier (M1) is functionalized - either terminally or non-terminally - with a group which is reactive to the oxirane group of the epoxy resin (E1). Suitable functional groups include but are not limited to: carboxyl; amino; hydroxyl; epoxy; mercaptan; anhydride; and, isocyanate. In addition, the modifier (M1) may be a functionalized homo-polymer or a functionalized random, block or star co-polymer.

In an important embodiment, the functional modifier (M1) used to modify the epoxy resin (E1) is a functionally-terminated diene-containing polymer having the general formula:

X-B-X

wherein: B is a polymer backbone polymerized from monomers selected from: C₄-C₁₀ dienes; C₄-C₁₀ dienes and at least one vinyl aromatic monomer, such as styrene, C₁-C₆ alkyl-substituted styrene, or halogen-substituted styrene; C₄-C₁₀ dienes and at least one vinyl nitrile monomer, such as acrylonitrile or methacrylonitrile; C₄-C₁₀ dienes, at least one vinyl nitrile monomer and at least one vinyl aromatic monomer; or, C₄-C₁₀ dienes, at least one vinyl nitrile monomer and an acrylate of the formula CH₂=CR-COOR¹ wherein R and R¹ are independently of one another selected from hydrogen or C₁-C₁₀ alkyl groups; and,
X can be any functional group that can react with an oxirane group, of which suitable examples include carboxy, amino, hydroxyl, epoxy, mercaptan, anhydride and isocyanate groups.

As the reactant modifier (M1), the functionally-terminated diene-containing polymer should typically be characterized by a functionality of from 1.1 to 2.5, for example from 1.5 to 2.5 or from 1.6 to 2.4. That aside, it is not precluded that the backbone (X) of the polymer be partially hydrogenated.

By way of non-limiting example, the functionally-terminated diene-containing polymer (M1) may be selected from: carboxyl-terminated polybutadiene; carboxyl-terminated poly(butadiene-acrylonitrile); and, carboxyl-terminated poly(butadiene-acrylonitrile-acrylic acid).

A preference as modifier (M1) for carboxyl-terminated poly(butadiene-acrylonitrile) (CTBN) may be noted and in particular for carboxyl-terminated poly(butadiene-acrylonitrile) (CTBN) constituted by: from 5 to 30 wt.% acrylonitrile; and, from 70 to 95 wt.% butadiene. Independently or additionally to this constitution, the carboxyl-terminated poly(butadiene-acrylonitrile) (CTBN) should have a number average molecular weight (Mn) of from 1000 to 50000 g/mol, for example from 2000 to 10000 g/mol. Further, the carboxyl-terminated poly(butadiene-acrylonitrile) is not precluded from including other functional groups - such as amino, phenolic, hydroxyl, epoxy, mercaptan or anhydride groups - pendent on the chain, in addition to the terminal carboxyl groups.

Aside from functionally-terminated diene-containing polymers, the use of diene-containing polymers functionalized non-terminally along the chain skeleton may be useful in some embodiments. Such functionalized polymers (M1) might include, by way of example: carboxylated polybutadiene; carboxylated poly(butadiene-styrene); mid-block carboxylated poly(styrene-ethylene/butadiene-styrene); amidated poly(butadiene-styrene); mercapto-polybutadiene; epoxidized polybutadiene; and, epoxidized poly(butadiene-styrene).

It is not precluded that the two component (2K) composition may comprise at least one elastomer functionalized epoxy resin which either comprises or consists of at least one urethane modified epoxy resin. In this embodiment, the functionalized modifier (M1) which modifies the epoxy resin (E1) is an isocyanate group-terminated, urethane pre-polymer obtainable by reacting a polyisocyanate compound (I) and a polyhydroxyl (P) compound. Without intention to limit this embodiment, the urethane pre-polymer (M1) should be characterized by: i) an NCO content of from 5 to 30%, preferably from 10 to 25% by weight, based on the prepolymer; and, ii) a functionality of 1.1 to 2.5. These characterizing properties may be found in known commercially available pre-polymers. Alternatively, components (I) and (P) may be reacted in a ratio and under conditions such that these properties of the resultant pre-polymer are achieved.

The polyisocyanates (I) used in preparing the pre-polymer (M1) include any aliphatic, cycloaliphatic, arylaliphatic, heterocyclic or aromatic polyisocyanate, or mixture thereof, having an average isocyanate functionality of at least 2.0 and an equivalent weight of at least 80. The isocyanate functionality of the polyisocyanate (I) will more generally be from 2.2 to 4.0, for example 2.3 to 3.5. Whilst functionalities greater than 4.0 may be used, their use can cause excessive crosslinking. The equivalent weight of the polyisocyanate is typically from 100 to 300, preferably from 1 10 to 250, and more preferably from 120 to 200.

The polyisocyanates, where required, may have been biuretized and / or isocyanurated by generally known methods, such as described in UK Patent No. 889,050.

Examples of suitable polyisocyanates (I) include but are not limited to: ethylene diisocyanate; 1,4-tetramethylene diisocyanate; hexamethylene diisocyanate (HDI); biuret or trimers of HDI; 1,12-dodecane diisocyanate, cyclobutane-1 ,3-diisocyanate cyclohexane-1,3- and 1,4-diisocyanate and mixtures of these isomers; 1-isocyanato- 3,3,5-trimethyl-5-isocyanato methyl cyclohexane; 2,4- and 2,6-hexahydrotolylene diisocyanate and mixtures of these isomers,; hexahydrol, 3- and/or 1,4-phenylene diisocyanate; perhydro-2,5'- and/or 4,4'-diphenyl methane diisocyanate; 1,3- and 1,4- phenylene diisocyanate; 2,4- and 2,6-tolylene diisocyanate and mixtures of these isomers; diphenyl methane-2,4'- and/or 4,4'-diisocyanate (MDI); naphthylene-1,5-diisocyanate; triphenyl methane-4,4',4'-tri-isocyanate; and, polyphenyl polymethylene polyisocyanates of the type obtained by condensing aniline with formaldehyde, followed by phosgenation such as described in UK Patent Nos. 874,430 and 848,671. It is noted that di- and / or polyisocyanates comprising ester, urea, allophanate, carbodiimide, uretdione and / or urethane groups may also be used in the process according to the invention.

The polyhydroxyl compound (P) used to derive the urethane pre-polymer (M1) should conventionally have a number average molecular weight (Mn) of from 400 to 10000 g/mol. The hydroxyl number of the polyhydroxy compound (P) should conventionally be from 20 to 850 mg KOH/g and preferably from 25 to 500 mg KOH/g. Further, it is desirable that the polyhydroxy compound (P) be selected from divalent or polyvalent: polyether polyols; polyester polyols; poly(ether-ester) polyols; poly(alkylene carbonate) polyols; hydroxyl-containing polythioethers; polymer polyols; and, mixtures thereof.

Whilst diols and triols of low molecular weights, for instance from 60 to 400 or 300 g/mol., may be reactive towards isocyanates (I), these polyols are typically only used as starter molecules, chain extenders and / or crosslinking agents in a reaction mixture which contains the one or more active hydrogen compounds (P). In this regard, mention may be made: aliphatic, cycloaliphatic and/or araliphatic diols having from 2 to 14 and preferably from 4 to 10 carbon atoms, such as ethylene glycol, 1,3- propanediol, 1,4-butanediol, 1,6-hexanediol, 1,10-decanediol, o-, m- and p- dihydroxycyclohexane; diethylene glycol; dipropylene glycol; bis(2- hydroxyethyl)hydroquinone; and, triols, such as 1,2,4-, and 1,3,5- trihydroxycyclohexane, glycerol and trimethylolpropane.

Polyether polyols are well-known in the art and include polyoxyethylene, polyoxypropylene, polyoxybutylene and polytetramethylene ether diols and triols. The polyether polyols may generally have weight average molecular weights (Mw) of from 400 to 10000 g/mol, for example from 1000 to 7000 g/mol, and be prepared by polymerizing alkylene oxides in the presence of an active hydrogen-containing initiator compound, as described in US Patent Nos. 4,269,9945, 4,218,543 and 4,374,210 for instance. The alkylene oxide monomers are typically selected from the group consisting of: ethylene oxide; propylene oxide; butylene oxides; styrene oxide; epichlorohydrin; epibromohydrin; and, mixtures thereof. The active hydrogen initiators are in turn typically selected from the group consisting of: water; ethylene glycol; propylene glycol; butanediol; hexanediol; glycerin; trimethylol propane; pentaerythritol; hexanetriol; sorbitol; sucrose; hydroquinone; resorcinol; catechol; bisphenols; novolac resins; phosphoric acid; amines; and mixtures thereof.

As is known in the art, polyester polyols may be prepared by reacting a polycarboxylic acid or anhydride thereof with a polyhydric alcohol. Examples of suitable polycarboxylic acids include succinic acid, adipic acid, suberic acid, azelaic acid, sebacic acid, phthalic acid, isophthalic acid, maleic acid, trimellitic acid, phthalic acid anhydride, tetrahydrophthalic acid anhydride, hexahydrophthalic acid anhydride, tetrachlorophthalic acid anhydride, endomethylene tetrahydrophthalic acid anhydride, maleic acid anhydride, glutaric acid anhydride, fumaric acid, and mixtures thereof. Examples of polyhydric alcohols which are useful in preparing polyester polyols include ethylene glycols, propane diols, butane diols, 1,6-hexanediol, 1,8-octanediol, neopentylglycol, glycerol, trimethylol propane, pentaerythritol, quinitol, mannitol, sorbitol, methyl glycoside, diethylene glycol, triethylene glycol, tetraethylene glycol, polyethylene glycols, polypropylene glycols, and mixtures thereof. As regards the present invention, useful polyester polyols will typically have weight average molecular weights (Mw) of from 1000 to 10000 g/mol.

In an embodiment of the present invention, the reactant polyhydroxyl compound(s) (P) have an average functionality of at least 1.5, preferably at least 1.8 and more preferably at least 2.0, but no greater than 4.0, preferably no greater than about 3.5 and more preferably no greater than 3.0. Independently or additionally, the equivalent weight of the reactant polyhydroxyl compound(s) (P) is at least 200 g/eq., preferably at least 500 g/eq. and more preferably at least 1,000 g/eq. but no greater than 3500 g/eq., preferably no greater than 3000 g/eq. and more preferably no greater than 2500 g/eq.

Starting from components (P) and (I) as defined above, the polyurethane pre-polymer (M1) may be prepared under anhydrous conditions by any suitable method, such as bulk polymerization and solution polymerization. The polyhydroxyl compound(s) (P) are present therein an amount sufficient to react with most of the isocyanate groups but leaving enough isocyanate groups to correspond with the desired free isocyanate content of the urethane pre-polymer (M1). And in that embodiment where the polyhydroxyl compound(s) (P) comprise a mixture of diols and triols, the proportion of diol to triol must be chosen to achieve the desired isocyanate functionality of the urethane prepolymer (M1).

In a further and a preferred embodiment of the present invention, the two component (2K) composition is characterized in that said at least one elastomer functionalized epoxy resin a2) either comprises or consists of at least one dimer acid-modified epoxy resin. The dimer acid modifier (M1) may be cyclic or non-cyclic but will conventionally be a C36 to C44 aliphatic diacid which may be prepared by the oxidative coupling of C18 to C22 unsaturated monoacids. Dimer acids obtained from the oxidative coupling of oleic acid, linoleic acid or talloil fatty acid may be mentioned as exemplary dimer acid modifiers (M1).

Having regard to the preferred embodiments discussed herein above, commercial examples of suitable elastomer modified epoxy resins include: Hypox (R) resins, including Hypox DA 323, available from Huntsman; EPON 58005 and EPON 58034 available from Miller-Stephenson; JER871 and JER872, available from Mitsubishi Chemical Corporation; B-Tough A1, A2 and A3 available from available from Cargill; YD-171 and YD-172, available from Nippon Steel Chemical Co., Ltd.; and, EPU-6, EPU-7N, EPU-11F, EPU-15F, EPU-1395, EPU-738, EPU-17, EPU-17T-6 and EPU-80 available from Adeka Corporation.

### a3) Further Epoxide Compounds

In certain embodiments, the two component (2K) composition may further comprise a3) at least one epoxide compound different from said compounds of constituent a1) and a2). For example, the two component (2K) composition may comprise, based on the weight of the composition, from 0 to 15 wt.%, from 0 to 10 wt.% or from 0 to 5 wt.% of a3) said at least one epoxide compound different from said compounds of constituent a1) and a2).

Epoxide compounds having utility in constituent a3) may include mono-functional epoxide compounds, multi- or poly-functional epoxide compounds, and combinations thereof. Constituent a3) of the two component (2K) composition may be constituted by a single epoxide compound but equally may be mixtures of epoxide functional compounds, including mixtures of compounds having different numbers of epoxide groups per molecule. An epoxide compound may be saturated or unsaturated, aliphatic, aromatic or heterocyclic and may be substituted. Further, the epoxide compound may also be monomeric or polymeric.

Illustrative monoepoxide compounds include: alkylene oxides; epoxy-substituted aromatic hydrocarbons; monoepoxy substituted alkyl ethers of monohydric alcohols or phenols, such as the glycidyl ethers of aliphatic and aromatic alcohols; monoepoxy-substituted alkyl esters of monocarboxylic acids, such as glycidyl esters of aliphatic and aromatic monocarboxylic acids; monoepoxy-substituted alkyl esters of polycarboxylic acids wherein the other carboxy group(s) are esterified with alkanols; alkyl and alkenyl esters of epoxy-substituted monocarboxylic acids; epoxyalkyl ethers of polyhydric alcohols wherein the other OH group(s) are esterified or etherified with carboxylic acids or alcohols; and, monoesters of polyhydric alcohols and epoxy monocarboxylic acids, wherein the other OH group(s) are esterified or etherified with carboxylic acids or alcohols.

By way of example, the following glycidyl ethers might be mentioned as being particularly suitable monoepoxide compounds for use herein: methyl glycidyl ether; ethyl glycidyl ether; propyl glycidyl ether; butyl glycidyl ether; pentyl glycidyl ether; hexyl glycidyl ether; octyl glycidyl ether; 2-ethylhexyl glycidyl ether; allyl glycidyl ether; benzyl glycidyl ether; phenyl glycidyl ether; 4-tert-butylphenyl glycidyl ether; 1-naphthyl glycidyl ether; 2-naphthyl glycidyl ether; 2-chlorophenyl glycidyl ether; 4-chlorophenyl glycidyl ether; 4-bromophenyl glycidyl ether; 2,4,6-trichlorophenyl glycidyl ether; 2,4,6-tribromophenyl glycidyl ether; pentafluorophenyl glycidyl ether; o-cresyl glycidyl ether; m-cresyl glycidyl ether; and, p-cresyl glycidyl ether.

In an embodiment, the monoepoxide compound conforms to Formula (E) herein below: 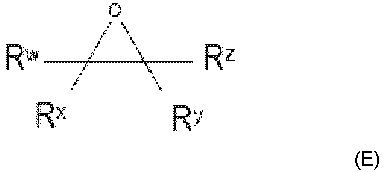 wherein: R^{w}, R^{x}, R^{y} and R^{z} may be the same or different and are independently selected from hydrogen, halogen, C₁-C₈ alkyl, C₂-C₁₂ alkenyl, C₆-C₁₈ aryl or C₇-C₁₈ aralkyl, with the proviso that at least one of R^{y} and R^{z} is not hydrogen.

It is preferred that R^{w}, R^{x} and R^{y} are hydrogen and R^{z} is either phenyl or C₁-C₈ alkyl and, more preferably, C₁-C₄ alkyl.

Having regard to this embodiment, exemplary monoepoxides include: ethylene oxide; 1,2-propylene oxide (*propylene oxide*); 1,2-butylene oxide; cis-2,3-epoxybutane; trans-2,3-epoxybutane; 1,2-epoxypentane; 1,2-epoxyhexane; 1,2-heptylene oxide; decene oxide; butadiene oxide; isoprene oxide; and, styrene oxide.

Again, without intention to limit the present disclosure, suitable polyepoxide compounds having utility in constituent a3) may be liquid, solid or in solution in solvent. Further, such polyepoxide compounds should have an epoxide equivalent weight of from 100 to 700 g/eq, for example from 120 to 320 g/eq. And generally, diepoxide compounds having epoxide equivalent weights of less than 500 g/eq. or even less than 400 g/eq. are preferred: this is predominantly from a costs standpoint, as in their production, lower molecular weight epoxy resins require more limited processing in purification.

As examples of types or groups of polyepoxide compounds which may be polymerized in present disclosure, mention may be made of: glycidyl ethers of polyhydric alcohols and polyhydric phenols; glycidyl esters of polycarboxylic acids; and, epoxidized polyethylenically unsaturated hydrocarbons, esters, ethers and amides.

Suitable diglycidyl ether compounds may be aromatic or aliphatic in nature and, as such, can be derivable from dihydric phenols and dihydric alcohols. And useful classes of such diglycidyl ethers are: diglycidyl ethers of aliphatic diols, such as 1,2-ethanediol, 1,4-butanediol, 1,6-hexanediol, 1,8-octanediol and 1,12-dodecanediol,; bisphenol A based diglycidylethers; bisphenol F diglycidyl ethers; diglycidyl o-phthalate, diglycidyl isophthalate and diglycidyl terephthalate; polyalkyleneglycol based diglycidyl ethers, in particular polypropyleneglycol diglycidyl ethers; and, polycarbonatediol based glycidyl ethers. Other suitable diepoxides which might also be mentioned include: diepoxides of double unsaturated fatty acid C₁-C₁₈ alkyl esters; and, butadiene diepoxide.

Further illustrative polyepoxide compounds include but are not limited to: glycerol polyglycidyl ether; trimethylolpropane polyglycidyl ether; pentaerythritol polyglycidyl ether; diglycerol polyglycidyl ether; polyglycerol polyglycidyl ether; and, sorbitol polyglycidyl ether.

And examples of highly preferred polyepoxide compounds include: bisphenol-A epoxy resins, such as DER^{™} 331, DER^{™} 330, DER^{™} 337 and DER^{™} 383; bisphenol-F epoxy resins, such as DER^{™} 354; bisphenol-A/F epoxy resin blends, such as DER^{™} 353; aliphatic glycidyl ethers, such as DER^{™} 736; polypropylene glycol diglycidyl ethers, such as DER^{™} 732; solid bisphenol-A epoxy resins, such as DER^{™} 661 and DER^{™} 664 UE; solutions of bisphenol-A solid epoxy resins, such as DER^{™} 671-X75; epoxy novolac resins, such as DEN^{™} 438; brominated epoxy resins such as DER^{™} 542; castor oil triglycidyl ether, such as ERISYS^{™} GE-35H; polyglycerol-3-polyglycidyl ether, such as ERISYS^{™} GE-38; and, sorbitol glycidyl ether, such as ERISYS^{™} GE-60.

Independently of or additional to any embodiments mentioned above, the first component of the composition can, in certain embodiments, comprise epoxide-functional alkoxy silanes having the formula (ES):

E-(CH₂)ₙ-Si(R^{s})ₘ(OR^{t})₃₋ₘ (ES)

wherein:
E is 2,3-epoxypropoxy, epoxycyclohexyl or epoxycyclopentyl;
n is from 1-10;
m is 0, 1 or 2;
each R^{s} is independently C₁-C₃ alkyl; and,
each R^{t} is independently C₁-C₃ alkyl.

Compounds in accordance with Formula ES where E is epoxycyclohexyl or epoxycyclopentyl should be considered to contribute to constituent a1) of the present disclosure. That aside, in preferred compounds of Formula (ES): E is 2,3-epoxypropoxy; n is from 1 to 8; m is 0 or 1; R^{s}, when present, is methyl or ethyl; and, each R^{t} is independently methyl or ethyl.

Exemplary silanes, which may be used alone or in combination, include but are not limited to: 2-(3,4-epoxycyclohexyl)ethyltrimethoxysilane; 3-glycidoxypropyl methyldimethoxysilane; γ-glycidoxy propyl trimethoxy silane; γ-glycidoxy ethyl trimethoxy silane; γ-glycidoxymethyl trimethoxy silane; γ-glycidoxy methyl triethoxy silane; 3-glycidoxypropyl methyldiethoxysilane; γ-glycidoxy ethyl triethoxy silane; γ-glycidoxy propyl triethoxy silane; and, 8-glycidooxyoctyl trimethoxysilane. The use of γ-glycidoxy propyl trimethoxy silane may be mentioned in particular.

When present, the epoxide functional alkoxysilanes should constitute less than 10 wt.%, preferably less than 5 wt.%, based on the total weight of epoxide functional compounds in the composition.

The present disclosure also does not preclude the first component of the composition from further comprising one or more cyclic monomers selected from the group consisting of: oxetanes; cyclic carbonates; cyclic anhydrides; and, lactones. The disclosures of the following citations may be instructive in disclosing suitable cyclic carbonate functional compounds: US Patent No. 3,535,342; US Patent No. 4,835,289; US Patent No. 4,892,954; UK Patent No. GB-A-1,485,925; and, EP-A-0 119 840. However, such cyclic co-monomers should constitute less than 10 wt.%, preferably less than 5 wt.%, based on the total weight of epoxide functional compounds in the composition.

### b) Cyclic Anhydride Compound(s)

The two component (2K) composition, and more particularly the second component thereof, comprises b)

at least one cyclic anhydride compound. The at least one cyclic anhydride compound should be included in the composition in such as an amount that molar ratio of anhydride groups [-C(O)-O-C(O)-] to epoxide groups is from 0.5:1 to 1.5:1, for example from 0.8:1 to 1.2:1.

In an alternative expression, which is not intended to be mutually exclusive to the above molar ratio term, the composition may comprise, based on the weight of the composition, from 20 to 60 wt.%, for example from 30 to 60 wt.% or from 40 to 60 wt.% of b) said least one cyclic anhydride compound.

The at least one cyclic anhydride compound may be represented by the formula: 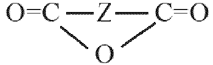 wherein: Z is a divalent aliphatic, cycloaliphatic or aromatic moiety.

Exemplary monocyclic anhydrides, which may be used alone or in combination, include: maleic anhydride; halogenated maleic anhydrides; adipic anhydride; succinic anhydride; C₁-C₁₈ alkyl-substituted succinic anhydrides; C₁-C₁₈ alkenyl-substituted succinic anhydrides, such as dodecenylsuccinic anhydride (DDSA); glutaric anhydride; C₁-C₁₈ alkyl-substituted glutaric anhydrides; C₁-C₁₈ alkenyl glutaric anhydrides; and, maleinized polybutadiene.

Exemplary bicyclic dianhydrides having utility in or as constituent b) include: hexahydrophthalic anhydride (HHPA); tetrahydrophthalic anhydride (THPA); methyltetrahydrophthalic anhydride (MTHPA); methylhexahydrophthalic anhydride (MHHPA); phthalic anhydride; and, trimellitic anhydride. The use, either alone or in combination, of hexahydrophthalic anhydride (HHPA) and methylhexahydrophthalic anhydride (MHHPA) may be mentioned in particular.

Examples of polycyclic anhydrides having utility in or as substituent b) include: pyromellitic dianhydride (PMDA); benzophenonetetracarboxylic dianhydride (BTDA); and, norbornene-based dicarboxylic acid anhydrides, such as 5-norbornene-2,3-dicarboxylic anhydride, nadic methyl anhydride (NMA, *methyl-5-Norbornene-2,3-dicarboxylic anhydride)* and chlorendic anhydride (*1,4,5,6,7,7-hexachloro-5-norbornene-2,3-dicarboxylic anhydride).* It is noted that in norbornene-based dicarboxylic acid anhydrides, the dicarboxylic acid anhydride group can be in the exo or endo conformation: in the context of this invention, the two isomers and mixtures of the two isomers are suitable in principle.

### c) Accelerator

The exemplary two component (2K) composition, and more particularly the second component thereof, may comprise c) at least one accelerator, which accelerator is a substance that promotes the reaction between the epoxide groups and the epoxide-reactive groups of the curative, in particular the reaction between the anhydride groups and the epoxide groups.

The composition may preferably comprise, based on the weight of the composition, from 0 to 15 wt.% of c) said at least one accelerator. In certain embodiments, the composition may comprise from 0.1 to 10 wt.%, for example from 0.1 to 5 wt.% of c) said at least one accelerator.

Without intention to the limit the present disclosure, mention may be made of the following suitable accelerators: i) acids or compounds hydrolyzable to acids, in particular ia) organic carboxylic acids, such as acetic acid, benzoic acid, salicylic acid, 2-nitrobenzoic acid and lactic acid; ib) organic sulfonic acids, such as methanesulfonic acid, p-toluenesulfonic acid and 4-dodecylbenzenesulfonic acid; ic) sulfonic acid esters; id) inorganic acids, such as phosphoric acid; ie) Lewis acid compounds, such as BF₃ amine complexes, bis-arene iron complexes and onium, in particular from phosphonium and sulfonium salts, preferably from phosphonium salts, especially quaternary phosphonium; if) Bronsted acid compounds, such as pentafluoroantimonic acid complexes; and, ig) mixtures of the aforementioned acids and acid esters; ii) phenols, in particular bisphenols; ii) tertiary amines, such as 2-piperazin-1-ylethanamine, 1,4-diazabicyclo[2.2.2]octane, benzyldimethylamine, α-methylbenzyl dimethylamine, triethanolamine, dimethylamino propylamine and salts of such tertiary amines; iv) imidazoles, including imidazole, 1-methylimidazole, 2-methylimidazole, 2-ethylimidazole, 2-ethyl-4-methylimidazole, 2-undecylimidazole, 2-heptadecylimidazole, 2-phenylimidazole, 2-phenyl-4-methylimidazole, 2-phenyl-4,5-dihydroxymethylimidazole, 2-phenyl-4-methyl-5-hydroxymethylimidazole, 1-cyanoethyl-2-undecylimidazole, 1-cyanoethyl-2-ethyl-4-imidazole, 2-phenylimidazole, 1-benzyl-2-phenylimidazole, benzimidazole, 2-phenyl-4, 5-dihydroxymethylimidazole, and 2, 3-dihydro-1H-pyrrolo [1,2-a ] benzimidazole, 1-vinylimidazole and N-(3-aminopropyl)imidazole; v) quaternary ammonium salts, such as benzyltrimethyl ammonium chloride; vi) amidines, such as 1,8-diazabicyclo[5.4.0]undec-7-ene; vii) urea derivatives; viii) thiourea derivatives; ix) guanidines, such as 1,1,3,3-tetramethylguanidine; x) phenol resins; and, xi) phosphites, such as di- and triphenylphosphites.

For surety, it is noted that the constituent c) may comprise an encapsulated imidazole compound, such as an encapsulated form of one of the above mentioned imidazole compounds. The encapsulated imidazole may be in the form of particles have a median volume particle size (Dv50) of from 1 to 50 microns, for example from 1 to 20 microns. The latency provided by the encapsulation may serve to improve the storage stability of the two component (2K) composition. Exemplary commercially available encapsulated imidazole compounds include: HX3941HP, HX A3042HP, HX A3922HP, HX A3792, HX A3748, HX3721, HX3722, HX3088, HX3741, HX3742, HX3713, HX3742, and HX3613 manufactured by Asahi Company; and, Technicure LC80, available from A&C Catalysts Inc.

The skilled artisan will recognize that the selection of an accelerator is not simply concerned with adding the fastest accelerator. Other factors determinative in the selection of accelerators include: cost; toxicity; solubility; processing effects, such as working time, premature gelation, exothermic degradation, expansion and off-gassing; final properties, such as glass transition temperature (T_{g}), modulus, strength, elongation at break and chemical resistance; regulatory concerns; and, ease of use.

In embodiments of the present disclosure, constituent c) comprises or consists of at least one accelerator selected from the group consisting of: tertiary amines; urea derivatives; thiourea derivatives; and, amidines. In particular, the cure accelerator c) may comprise or consist of at least one urea derivative of Formula (V) or Formula (VI): 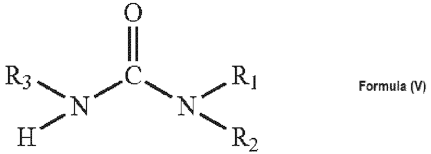 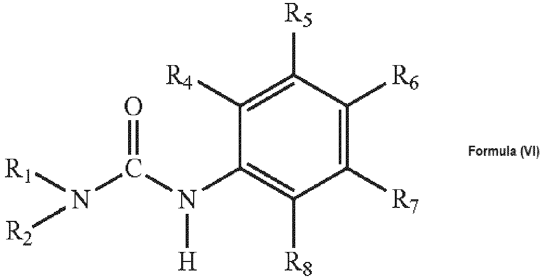 wherein:
at least one residue R¹, R², R³ is not hydrogen;
R¹ and R² are independently selected from hydrogen, C₁-C₁₈ alkyl and C₃-C₁₈ cycloalkyl;
R³ is hydrogen, C₁-C₁₈ alkyl, C₃-C₁₈ cycloalkyl, C₆-C₁₈ aryl, C₆-C₁₈ aralkyl, C₆-C₁₈-alkylaryl, C₁-C₁₈ alkyl substituted with -NHC(O)NR¹R², C₃-C₁₈ cycloalkyl substituted with - NHC(O)NR¹R², C₆-C₁₈ aryl substituted with -NHC(O)NR¹R²; C₆-C₁₈ aralkyl substituted with - NHC(O)NR¹R²; and, C₆-C₁₈ aralkyl substituted with -NHC(O)NR¹R²; and,
R⁴, R⁵, R⁶, R⁷ and R⁸ are independently selected from hydrogen, halogen, C₁-C₁₈ alkyl, C₃ to C₁₈ cycloalkyl, C₆-C₁₈ aryl, C₆-C₁₈ aralkyl, C₆-C₁₈-alkylaryl , -CF₃, -NHC(O)NR¹R², C₁-C₁₈ alkyl substituted with -NHC(O)NR¹R², C₃-C₁₈ cycloalkyl substituted with -NHC(O)NR¹R², C₆-C₁₈ aryl substituted with -NHC(O)NR¹R²; C₆-C₁₈ aralkyl substituted with -NHC(O)NR¹R²; and, C₆-C₁₈ aralkyl substituted with -NHC(O)NR¹R².

The substituents (R¹-R⁸) of the urea derivative of Formulae (V) and (VI) should be selected to ensure any said derivative(s) is liquid at room temperature and 1 atmosphere pressure and has a viscosity of less than 1 Pa.s, preferably less than 100 mPa.s at 25°C. Additional to those considerations, it is preferred that the urea derivatives of Formulae (V) and (VI) meet the following conditions:
at least one residue R¹, R², R³ is not hydrogen;
R¹ and R² are independently selected from hydrogen and C₁-C₄ alkyl; and,
R⁴, R⁵, R⁶, R⁷ and R⁸ are independently selected from hydrogen, halogen, C₁-C₄ alkyl and - NHC(O)NR¹R².

A particular reference to the use of N,N-diethylurea, N,N-dipropylurea, N,N-ethyl-methylurea, N,N-dimethylurea, 1,1'-(4-methyl-m-phenylene)-bis-(3,3-dimethylurea) or 1,1'-(2-methyl-m-phenylene)-bis-(3,3-dimethylurea) may be made.

Further, exemplary commercially available urea derivatives having utility in the present disclosure include: Omicure U-24, Omicure U-35, Omicure U-410, Omicure U-52, Omicure U-415 and Omicure U-405, available from Huntsman; Amicure UR, Amicure UR7/10, Amicure UR200, Amicure UR300, Amicure UR500, Amicure UR2T, Amicure UR41 and Amicure UR-D, available from Evonik; and, Dyhard UR200, Dyhard UR300, Dyhard UR500, Dyhard UR700 and Ecure 30, available from Alzchem Corporation.

In a further interesting embodiment, constituent c) comprises or consists of at least one quaternary phosphonium compound. Suitable phosphonium compounds include those represented by the general formula (QP1): 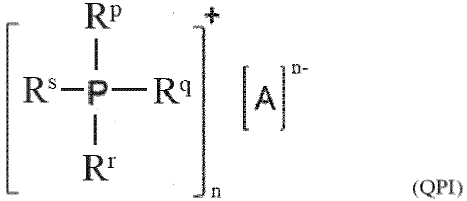 wherein:
R^{p}-R^{s} are each independently selected from H, halogen, C₁-C₁₈ alkyl, C₂-C₁₈ alkenyl, C₂-C₁₈ alkynyl, C₃-C₈ cycloalkyl or C₆-C₁₈ aryl, C₇-C₁₈ aralkyl or C₇-C₁₈ alkaryl; and,
Aⁿ⁻ is a counteranion of valency n.

Preferably R^{p}-R^{s} are each independently selected from C₁-C₁₂ alkyl, in particular from C₁-C₈ alkyl.

Exemplary counteranions (An-) include but are not limited to:
halides;
pseudohalides and halogen-containing compounds of the formulae PF₆ ⁻, CF₃SO₃ ⁻, (CF₃SO₃)₂N⁻, CF₃CO₂ ⁻ and CCl₃CO₂ ⁻;
CN⁻, SCN⁻ and OCN⁻;
sulfates, sulfites and sulfonates of the general formulae SO₄ ²⁻, HSO₄ ⁻, SO₃ ²⁻, HSO₃ ⁻, R^{a}OSO₃ ⁻ and R^{a}SO₃ ⁻;
phosphates of the general formulae PO₄ ³⁻, HPO₄ ²⁻, H₂PO₄ ⁻, R^{a}PO₄ ²⁻, HR^{a}PO₄ ⁻ and R^{a}R^{b}PO₄ ⁻;
phosphonates and phosphinates of the general formulae R^{a}HPO₃ ⁻,R^{a}R^{b}PO₂ ⁻ and R^{a}R^{b}PO₃ ⁻;
phosphites of the general formulae: PO₃ ³⁻, HPO₃ ²⁻, H₂PO₃ ⁻, R^{a}PO₃ ²⁻, R^{a}HPO₃ ⁻ and R^{a}R^{b}PO₃ ⁻;
phosphonites and phosphinites of the general formulae R^{a}R^{b}PO₂ ⁻, R^{a}HPO₂ ⁻, R^{a}R^{b}PO⁻ and R^{a}HPO⁻;
borates of the general formulae BO₃ ³⁻, HBO₃ ²⁻, H₂BO₃ ⁻, R^{a}R^{b}BO₃ ⁻, R^{a}HBO₃ ⁻, R^{a}BO₃ ²⁻, B(OR^{a})(OR^{b})(OR^{c})(OR^{d})⁻, B(HSO₄)⁻ and B(R^{a}SO₄)⁻; and, boronates of the general formulae R^{a}BO₂ ²⁻ and R^{a}R^{b}BO⁻;
alkoxides and aryloxides of the general formula R^{a}O⁻; or,
sulfides, hydrogen sulfides, polysulfides, hydrogen polysulfides and thiolates of the general formulae S²⁻, HS⁻, [Sᵥ]²⁻, [HSᵥ]⁻ and [R^{a}S]⁻,
in which general formulae
v is a whole positive number of from 2 to 10.
R^{a}, R^{b}, R^{c} and R^{d} are independently selected from hydrogen, halogen, C₁-C₁₂ alkyl, C₅-C₁₂ cycloalkyl, C₅-C₁₂ heterocycloalkyl, C₆-C₁₈ aryl, C₇-C₁₈ alkylaryl, C₇-C₁₈ aralkyl or C₅-C₁₈ heteroaryl.

As regards said moieties R^{a}, R^{b}, R^{c} and R^{d} , the terms C₁-C₁₂ alkyl, C₅-C₁₂ cycloalkyl, C₅-C₁₂ heterocycloalkyl, C₆-C₁₈ aryl, C₇-C₁₈ alkylaryl, C₇-C₁₈ aralkyl and C₅-C₁₈ heteroaryl expressly include groups wherein one or more hydrogen atoms are substituted by halogen atoms. For instance, CH₃, -CH₂F, -CHF₂ and -CF₃ represent exemplary C₁ alkyl groups.

Exemplary compounds in accordance with Formula QP1, which may be used alone or in combination, include trihexyl(tetradecyl)phosphonium chloride and tributylethylphosphonium diethyl phosphate.

### d) Black Pigment

The composition of the present disclosure comprises d) black pigment consisting of at least one organic compound. The composition may typically comprise, based on the weight of the composition, from 0.1 to 10 wt.%, for example from 0.5 to 10 wt.% or from 1 to 5 wt.% of d) said black pigment. For the purposes of the present disclosure, "*carbon black*", as a form of paracrystalline carbon, is not considered to be an organic compound.

For completeness, organic compounds of the black pigment which contain reactive groups will be blended into the appropriate component of a two-component (2K) composition to ensure the storage stability thereof. Unreactive organic compounds may be formulated into either or both of the two components.

There is no particular intention to limit the shape of the particles which may be employed as black pigment: particles that are acicular, spherical, ellipsoidal, cylindrical, bead-like, cubic or platelet-like may be used alone or in combination. Moreover, it is envisaged that agglomerates of more than one particle type may be used. However, it is preferred that the black pigment is characterized by at least one of: i) a median volume particle diameter (D_{V}50), as determined by dynamic light scattering, of from 10 to 500 nm, for example from 50 to 500 nm or from 100 to 300 nm; and, ii) a surface area, as determined by Brunauer Emmett Teller (BET) nitrogen adsorption method, of from 10 to 500 m²/g, for example from 10 to 250 m²/g or from 10 to 100 m²/g.

Without intention to limit the present disclosure, the black pigment of the present disclosure may comprise: benzofuranone-based compounds, which are typically obtained by cyclization of 2,5-dihydrobenzene-1,4-diacetic acid and an isatine in the presence of an acidic catalyst and for which an instructive reference is WO 2010/081624; perylene-based black compounds, including those compounds obtainable by the cyclization of perylene-3,4,9,10-tetracarboxylic acid dianhydride with o-diamine; aniline-based black compounds; azine-based black compounds, including nigrosine, as exemplified by Color Index (C.I.) Solvent Black 7 and C.I. Solvent Black 5; cyanine-based black compounds, including phthalocyanine-based black compounds; anthraquinone-based black compounds; and, combinations thereof. Further exemplary azine-based compounds include those compounds obtainable by an azo coupling reaction of a diazo compound prepared by diazotizing a monoamine with a compound having an 11H-benzo [a] carbazole structure.

In an embodiment, the black pigment comprises at least one compound chosen from: benzodifuranone-based compounds; perylene-based compounds; azine-based compounds; and, mixtures thereof.

Commercially available pigments having utility herein, either alone or in combination, include but are not limited to: for benzodifuranone-based pigment, Irgaphor Black S0100, available from BASF; for C.I. Solvent Black 5, products under the trade names Spirit Black SB, Spirit Black SSBB, Spirit Black AB, Spirit Black ABL, NUBIAN BLACK NH-805 and NUBIAN BLACK NH-815, available from Orient Chemical Industries Co., Ltd; for C.I. Solvent Black 7, products under the trade names Nigrosine Base SA, Nigrosine Base SAP, Nigrosine Base SAPL, Nigrosine Base EE, Nigrosine Base EEL, Nigrosine Base EX, Nigrosine Base EXBP, Special Black EB, NUBIAN BLACK TN-870, NUBIAN BLACK TN-877, NUBIAN BLACK TH-807, NUBIAN BLACK TH-827 and NUBIAN GREY IR-B, available from Orient Chemical Industries Co., Ltd; for further azine based compounds, products under the trade names BONTRON N-01, BONTRON N-04, BONTRON N-07, BONTRON N-09, BONTRON N-21, BONTRON N-71, BONTRON N-75, or BONTRON N-79 manufactured by Orient Chemical Industries Co., Ltd; Oil Black 860 (*2,2-dimethyl-1,3-dihydroperimidin-6-yl)-(4-phenylazo-1-naphthyl)diazene,* available from Orient Corporation of America; and, VALIFAST 3820 *(sodium bis[1-[(2-hydroxy-4-nitrophenyl)azo]-2-naphtholato(2-)]chromate(1-)*) available from Orient Corporation of America.

### e) Tougheners

The two-component (2K) composition of the present disclosure comprises e) toughener. The toughener should typically be included in the composition in an amount which serves to improve the toughness and durability of the resinous matrix obtained upon curing of the composition, but which does not compromise properties such as stiffness, strength, thermal stability and chemical resistance. Typically, the composition may comprise from 1 to 30 wt.%, such as from 5 to 25 wt.% or from 10 to 20 wt.%, of e) said tougheners, based on the weight of the composition. For completeness, tougheners which contain reactive groups will be blended into the appropriate component of a two-component (2K) composition to ensure the storage stability thereof. Unreactive tougheners may be formulated into either or both of the two components.

Exemplary tougheners may be selected from: amine functionalized tougheners; C=C double-bond functionalized rubber; and, toughening rubber in the form of core-shell particles. A preference may be mentioned for the use of core-shell rubbers particles as at least a part of said constituent e).

The term "*core shell rubber*" or CSR is being employed in accordance with its standard meaning in the art as denoting a rubber particle core formed by a polymer comprising an elastomeric or rubbery polymer as a main ingredient and a shell layer formed by a polymer which is graft polymerized onto the core. The shell layer partially or entirely covers the surface of the rubber particle core in the graft polymerization process. By weight, the core should constitute at least 50 wt.% of the core-shell rubber particle.

The polymeric material of the core should have a glass transition temperature (T_{g}) of no greater than 0⁰C and preferably a glass transition temperature (T_{g}) of -20⁰C or lower, more preferably -40⁰C or lower and even more preferably -60°C or lower. The polymer of the shell is non-elastomeric, thermoplastic or thermoset polymer having a glass transition temperature (T_{g}) of greater than room temperature, preferably greater than 30°C and more preferably greater than 50°C.

Without intention to limit the disclosure, the core may be comprised of: a diene homopolymer, for example, a homopolymer of butadiene or isoprene; a diene copolymer, for example a copolymer of butadiene or isoprene with one or more ethylenically unsaturated monomers, such as vinyl aromatic monomers, (meth)acrylonitrile or (meth)acrylates; polymers based on (meth)acrylic acid ester monomers, such as polybutylacrylate; and, polysiloxane elastomers such as polydimethylsiloxane and crosslinked polydimethylsiloxane.

Similarly without intention to limit the present disclosure, the shell may be comprised of a polymer or copolymer of one or more monomers selected from: (meth)acrylates, such as methyl methacrylate; vinyl aromatic monomers, such as styrene; vinyl cyanides, such as acrylonitrile; unsaturated acids and anhydrides, such as acrylic acid; and, (meth)acrylamides. The polymer or copolymer used in the shell may possess acid groups that are cross-linked ionically through metal carboxylate formation, in particular through forming salts of divalent metal cations. The shell polymer or copolymer may also be covalently cross-linked by monomers having two or more double bonds per molecule.

It is preferred that any included core-shell rubber particles have a median volume particle size (Dv50) of from 10 nm to 300 nm, for example from 50 nm to 250 nm as measured via dynamic light scattering. For completeness, the present application does not preclude the presence of two or more types of core shell rubber (CSR) particles with different particle size distributions in the composition to provide a balance of key properties of the resultant cured product, including shear strength, peel strength and resin fracture toughness.

The core-shell rubber may be selected from commercially available products, examples of which include: Paraloid EXL 2650A, EXL 2655 and EXL2691 A, available from The Dow Chemical Company; Clearstrength^{®} XT100, available from Arkema Inc.; the Kane Ace^{®} MX series available from Kaneka Corporation, and in particular MX 120, MX 125, MX 130, MX 136, MX 551, MX553; and, METABLEN SX-006 available from Mitsubishi Rayon.

### f) Additives and Adjunct Ingredients

The compositions of the present disclosure will typically further comprise adjuvants and additives that can impart improved properties to these compositions. For instance, the adjuvants and additives may impart one or more of: improved adhesion to substrates; improved fracture toughness; improved elastic properties; improved elastic recovery; longer enabled processing time; faster curing time; lower residual tack and, improved levelling. Included among such adjuvants and additives are: adhesion promoters; cure retarders; surfactants, for which a preference for non-ionic surfactants may be mentioned; wetting agents; lubricants; plasticizers; stabilizers; further colorants; rheology control agents; biocides; flame retardants; mold release agents, solvents; and, non-reactive diluents.

Such adjuvants and additives can be used in such combination and proportions as desired, provided they do not adversely affect the nature and essential properties of the composition. While exceptions may exist in some cases, these adjuvants and additives should not *in toto* comprise more than 30 wt.% of the total composition and preferably should not comprise more than 20 wt.% of the composition.

For completeness, it is noted that, in general, adjunct materials and additives which contain reactive groups will be blended into the appropriate component of a two-component (2K) composition to ensure the storage stability thereof. Unreactive materials may be formulated into either or both of the two components.

A "*plasticizer*" for the purposes of this disclosure is a substance that decreases the viscosity of the composition and thus facilitates its processability. Herein the plasticizer may constitute up to 10 wt.% or up to 5 wt.%, based on the total weight of the composition, and is preferably selected from the group consisting of: polydimethylsiloxanes (PDMS); diurethanes; ethers of monofunctional, linear or branched C4-C16 alcohols, such as Cetiol OE (obtainable from BASF); esters of abietic acid, butyric acid, thiobutyric acid, acetic acid, propionic acid esters and citric acid; esters based on nitrocellulose and polyvinyl acetate; fatty acid esters; dicarboxylic acid esters; esters of OH-group-carrying or epoxidized fatty acids; glycolic acid esters; benzoic acid esters; phosphoric acid esters; sulfonic acid esters; trimellitic acid esters; epoxidized plasticizers; polyether plasticizers, such as end-capped polyethylene or polypropylene glycols; polystyrene; hydrocarbon plasticizers; chlorinated paraffin; and, mixtures thereof. It is noted that, in principle, phthalic acid esters can be used as the plasticizer but these are not preferred due to their toxicological potential.

"*Stabilizers*" for purposes of this disclosure are to be understood as antioxidants, UV stabilizers or hydrolysis stabilizers. Herein stabilizers may constitute *in toto* from 0 to 10 wt.%, for example from 0 to 5 wt.%, based on the total weight of the composition. Standard commercial examples of stabilizers suitable for use herein include: sterically hindered phenols; thioethers; benzotriazoles; benzophenones; benzoates; cyanoacrylates; acrylates; amines of the hindered amine light stabilizer (HALS) type; phosphorus; sulfur; and, mixtures thereof.

Whilst the composition of the present disclosure necessarily comprises black pigment and, in some embodiments, core-shell particles, this does not preclude the presence in the composition of further fillers. Such fillers may serve as *inter alia* reinforcing fillers, extending fillers, magnetic fillers, thermally conductive fillers, electrically conductive fillers or as particulate absorbers of electromagnetic radiation. Whilst such further fillers should be typically comprise more than 10 wt.% of the weight of the composition, the desired viscosity of the curable composition will typically be determinative of the total amount of further filler which may be added.

There is equally no particular intention to limit the shape of the particles which may be employed as fillers: particles that are acicular, spherical, ellipsoidal, cylindrical, bead-like, cubic or platelet-like may be used alone or in combination. Moreover, it is envisaged that agglomerates of more than one particle type may be used. Moreover, there is no particular intention to limit the size of the particles employed as fillers. However, such fillers will conventionally have a median particle size by volume (Dv50), as measured by dynamic light scattering, of from 0.1 to 1500 µm, for example from 1 to 1250 µm.

Exemplary further inorganic fillers include for example, chalk, lime powder, precipitated and/or pyrogenic silica, zeolites, bentonites, magnesium carbonate, diatomite, clay, talc, titanium oxide, iron oxide, sand, quartz, flint, mica, glass powder, and other ground mineral substances. Organic fillers can also be used, in particular wood fibers, wood flour, sawdust, cellulose, cotton, pulp, cotton, wood chips, chopped straw, chaff, ground walnut shells, and other chopped fibers. Short fibers such as glass fibers, glass filament, polyacrylonitrile, Kevlar fibers, or polyethylene fibers can also be added.

The pyrogenic and/or precipitated silica may advantageously have a BET surface area from 10 to 90 m²/g: when they are used, such silicas do not cause any additional increase in the viscosity of the composition according to the present disclosure, but do contribute to strengthening the cured composition. It is likewise conceivable to use pyrogenic and/or precipitated silicic acids having a higher BET surface area, advantageously from 100 to 250 m²/g, in particular from 110 to 170 m²/g, as a filler: because of the greater BET surface area, the effect of strengthening the cured composition is achieved with a smaller proportion by weight of silica.

Also suitable as fillers are hollow spheres having a mineral shell or a plastic shell. These can be, for example, hollow glass spheres that are obtainable commercially under the trade names Glass Bubbles^{®}. Plastic-based hollow spheres, such as Expancel^{®} or Dualite^{®}, may be used: they are made up of inorganic or organic substances and each have a diameter of 1 mm or less, preferably 500 µm or less.

Fillers which impart thixotropy to the composition may be preferred for many applications: such fillers are also described as rheological adjuvants, e.g. hydrogenated castor oil, fatty acid amides, or swellable plastics such as PVC.

It is noted that compounds having metal chelating properties may also be used in the compositions of the present disclosure to help enhance the adhesion of the cured composition to a substrate surface. Also suitable for use as adhesion promoters are the acetoacetate-functionalized modifying resins sold by King Industries under the trade name K-FLEX XM-B301.

A need also occasionally exists to lower the viscosity of the composition according to the present disclosure for specific applications, by using non-reactive diluent(s). For instance, but for illustration only, the composition may contain one or more of: xylene; 2-methoxyethanol; dimethoxyethanol; 2-ethoxyethanol; 2-propoxyethanol; 2-isopropoxyethanol; 2-butoxyethanol; 2-phenoxyethanol; 2-benzyloxyethanol; benzyl alcohol; ethylene glycol; ethylene glycol dimethyl ether; ethylene glycol diethyl ether; ethylene glycol dibutyl ether; ethylene glycol diphenyl ether; diethylene glycol; diethylene glycol-monomethyl ether; diethylene glycol-monoethyl ether; diethylene glycol-mono-n-butyl ether; diethylene glycol dimethyl ether; diethylene glycol diethyl ether; diethylene glycoldi-n-butylyl ether; propylene glycol butyl ether; propylene glycol phenyl ether; dipropylene glycol; dipropylene glycol monomethyl ether; dipropylene glycol dimethyl ether; dipropylene glycoldi-n-butyl ether; N-methylpyrrolidone; diphenylmethane; diisopropylnaphthalene; petroleum fractions such as Solvesso^{®} products (available from Exxon); alkylphenols, such as tertbutylphenol, nonylphenol, dodecylphenol and 8,11,14-pentadecatrienylphenol; styrenated phenol; bisphenols; aromatic hydrocarbon resins especially those containing phenol groups, such as ethoxylated or propoxylated phenols; adipates; sebacates; phthalates; benzoates; organic phosphoric or sulfonic acid esters; and sulfonamides.

The above aside, it is preferred that said non-reactive diluents constitute less than 10 wt.%, in particular less than 5 wt.% or less than 2 wt.%, based on the total weight of the composition.

### Formation of the Two-Component (2K) Composition

To form the two component (2K) compositions, the reactive components are brought together and mixed in such a manner as to induce the hardening thereof. The reactive compounds should be mixed under sufficient shear forces to yield a homogeneous mixture. It is considered that this can be achieved without special conditions or special equipment. That said, suitable mixing devices might include: static mixing devices; magnetic stir bar apparatuses; wire whisk devices; augers; batch mixers; planetary mixers; C.W. Brabender or Banburry^{®} style mixers; and, high shear mixers, such as blade-style blenders and rotary impellers.

For small-scale applications in which volumes of less than 2 liters will generally be used, the preferred packaging for the two-component (2K) compositions will be side-by-side double cartridges or coaxial cartridges, in which two tubular chambers are arranged alongside one another or inside one another and are sealed with pistons: the driving of these pistons allows the components to be extruded from the cartridge, advantageously through a closely mounted static or dynamic mixer. For larger volume applications, the two components of the composition may advantageously be stored in drums or pails: in this case, the two components are extruded via hydraulic presses, in particular by way of follower plates, and are supplied via pipelines to a mixing apparatus which can ensure fine and highly homogeneous mixing of the first and second components. In any event, for any package it is important that the binder and/or hardener component be disposed with an airtight and moisture-tight seal, so that both components can be stored for a long time, ideally for 12 months or longer.

Non-limiting examples of two-part dispensing apparatuses and methods that may be suitable for the present disclosure include those described in U.S. Patent No. 6,129,244 and US Patent No. 8,313,006.

The two-component (2K) curable compositions should broadly be formulated to exhibit an initial viscosity - determined within two minutes of the mixing of the components - of less than 10000 mPa·s, for instance less than 8000 mPa.s or even less than 5000 mPa.s, at 25°C. The composition may desirably have an initial viscosity of from 1000 to 5000 mPa.s or from 1000 to 4000 mPa.s, as determined at 25°C. Independently of or additional to said viscosity characteristics, the two-component (2K) composition should be formulated to be bubble (foam) free upon mixing and subsequent curing.

The initially mixed compositions may then be applied to substrates by conventional methods such as: casting; brushing; roll coating; doctor-blade application; printing methods; jetting; omega coating; control seam coating; dot coating; and, spraying methods, including but not limited to air-atomized spray, air-assisted spray, airless spray, high-volume low-pressure spray, slot spray and curtain spray coating.

For coating, adhesive and sealant applications, it is recommended that the compositions be applied to a wet film thickness of from 10 to 250 µm, for example from 25 to 150 µm. The application of thinner layers within this range is more economical and provides for a reduced likelihood of thick cured regions that may - for coating applications - require sanding. However, great control must be exercised in applying thinner coatings or layers so as to avoid the formation of discontinuous cured films.

In an alternative statement, which is not intended to be mutually exclusive of that above, it is recommended that the compositions be applied such that the coating weight of the materials is from 50 to 250 grams per square metre (gsm), preferably from 50 to 150 gsm.

The two-component (2K) composition may typically be formulated to demonstrate a setting time of from 1 to 60 minutes and more commonly of from 1 to 20 minutes or from 1 to 15 minutes, which setting time is understood herein to be the time after which the viscosity of the composition - when maintained at 20°C - has doubled from its initial viscosity. The rate of curing of the compositions can, of course, be moderated by the input of energy.

The curing of the compositions of the disclosure typically occurs at temperatures in the range of from 20°C to 250°C, preferably from 20°C to 200°C, and in particular from 50°C to 200°C. The temperature that is suitable depends on the specific compounds present and the desired curing rate and can be determined in the individual case by the skilled artisan, using simple preliminary tests if necessary. Of course, curing at lower temperatures within the detailed ranges is advantageous as it obviates the requirement to substantially heat or cool the mixture from the usually prevailing ambient temperature. Where applicable, however, the temperature of the mixture formed from the respective components of the two-component (2K) composition may be raised above the mixing temperature and / or the application temperature using conventional means including microwave induction.

The compositions of the present disclosure may find utility *inter alia* as: casting resins; molding resins; potting and encapsulation resins; binding agents for fibers and / or particles; the coating of glass; the coating of mineral building materials, such as lime- and / or cement-bonded plasters, gypsum-containing surfaces, fiber cement building materials and concrete; the coating, sealing and adhesion of wood and wooden materials, such as chipboard, fiber board and paper; the coating, sealing and adhesion of metallic substrates; and, the coating, sealing and adhesion of various plastic surfaces.

For completeness, it is noted that the present disclosure does not preclude the preparation of compositions in the form of "*film adhesive*"*.* A pre-polymer mixture of epoxide compounds, curative and other desired components is applied as a coating onto a polymer film substrate, rolled up and stored at a sufficiently low temperature to inhibit the chemical reactions between the components. When needed, the film adhesive is removed from the low temperature environment and applied to a metal or composite part, the backing is stripped off and the assembly completed and cured in an oven or autoclave.

In that embodiment mentioned above where the cured composition is to form a matrix in which fibers are dispersed in the formation of composite parts, exemplary methods for the formation of such composites include but are not limited to: co-extrusion; wet laying-up; spraying-up; compression molding; injection molding; resin-transfer molding (RTM), including variants thereof such as press molding, squeeze molding, structural injection molding and vacuum-assisted resin transfer molding (VARTM); pultrusion; and, prepregs. The formation of composite structures by resin transfer molding and injection molding may be mentioned in particular.

Having regard to methods of molding, the composition to be shaped or cast can be introduced into a mold by either contact or non-contact means. As an exemplary contact methodology, mention may be made of funneling. As exemplary non-contact methodologies, there may be mentioned jetting, omega coating, control seam coating and slot spray coating. The introduction of the composition under pressure is not usually required but should a pressurized application of the composition be elected, suitable pressures may be from 1.5 to 60 bars, for example from 2 to 10 bars. In certain embodiments, the composition may be introduced whilst the mold itself is maintained under low pressure or under vacuum: this can serve to eliminate air from the mold space, to assist in resin injection, to assist in the resins penetration into the mold and to aid in the removal of volatiles.

The composition should be sufficiently fluid upon introduction into the mold for it to penetrate the desired regions therein and then to harden in said regions. However, a molding operation should limit the thermal strain to which the molded product (or composite) is exposed: this might be effected by molding the composite under pressure to reduce the molding cycling time or under vacuum to enable lower temperature processing. The temperature and pressure conditions applied to either the mold or to the composition should not promote the melting of a constituent particulate filler or, where applicable, the rupture, breakage or beading of fibrous fillers.

Typically the mold itself - into which the composition is introduced - will possess a low coefficient of thermal expansion (CTE), such as CTE of less than 2 x 10⁻⁵ K⁻¹ or less than 1.5 x 10⁻⁵ K⁻¹: the use of aluminium and stainless steel molds may be mentioned. In use, the internal surface(s) of the mold may be provided with a release agent to facilitate the removal of the cast or shaped material therefrom.

The composition may be allowed to fully cure within the mold, which mold may be optionally sealed during said curing. In some embodiments however, particularly where the mold is to be utilized in a further fabrication step, the composition is permitted to partially cure in the mold; the partially cured compositions is then withdrawn from the mold and permitted to fully cure externally.

The term "*partially cured*" means that curing of the curable composition has been initiated and that, for example, cross-linking of components of the composition has commenced. The term encompasses any amount of cure upon application of the curing condition, from the formation of a single cross-link up to but not including a fully cross-linked state. The rate and mechanism with which the composition cures is contingent on various factors, including the components thereof, functional groups of the components and the parameters of the curing condition.

At least partial solidification of a given composition is generally indicative of cure. However, cure may be indicated in other ways including, for instance, a viscosity change of the composition, an increased temperature of that composition and / or a transparency / opacity change of that composition.

Typically, the partially cured composition should not be removed from the mold until the composition can substantially retain its shape upon exposure to ambient conditions. By "*substantially retain its shape*" is meant that at least about 50% by volume, and more usually at least about 80% or about 90% by volume of the at least partially cured composition retains its shape and does not flow or deform upon exposure to ambient conditions for a period of 5 minutes. Under such circumstances, gravity typically may not substantially impact the shape of the at least partially cured or partially dried layer upon exposure to ambient conditions.

The shape of a molded article of partially cured composition may typically impact whether that object substantially retains its shape. For example, when the molded article is rectangular or has another simplistic shape, the at least partially cured composition may be more resistant to deformation at even lesser levels of cure than articles having more complex shapes.

The following examples are illustrative of the present invention and are not intended to limit the scope of the invention in any way.

### EXAMPLES

The following materials were employed in the Examples:

| | |
|---|---|
| Celloxide 2021P: | Cycloaliphatic diepoxide having an epoxide equivalent weight of 137 g/eq., available from Daicel. |
| Loxiol G71s: | Polyester lubricant, available from Emery Oleochemicals |
| Kane Ace MX-555: | Core shell rubber particles (40wt%), pre-dispersed in cycloaliphatic epoxy resin, available from Kaneka. |
| Nubian Black TN-870: | Black organic pigment, available from Orient Corporation |
| Oil Black 860: | Black organic pigment, available from Orient Corporation |
| Valifast 3820: | Black organic pigment, available from Orient Corporation |
| Monarch 460: | Specialty carbon black, available from Cabot Corporation |
| 1-MI: | 1-methylimidazole, available from Sigma Aldrich |
| MHHPA NC: | Methylhexahydrophthalic anhydride, available from Dixie Chemical Company |

### Preparation

First and second components of two-part (2K) compositions were independently prepared in accordance with Table 1 herein below. For completeness, the percentages by weight given in Table are with respect to the total weight of the composition.

**Table 1**

| **Component** | **Ingredient** | **Example 1 (wt.%)** | **Example 2 (wt.%)** | **Example 3 (wt.%)** | **Example 4 (wt.%)** | **Example 5 (wt.%)** | **Comparative Example 1 (wt.%)** | **Comparative Example 2 (wt.%)** |
|---|---|---|---|---|---|---|---|---|
| 1^{st} Component | Kane Ace MX-555 | 37.7 | 37.8 | 37.6 | 37.8 | 37.8 | 37.8 | 37.8 |
| | Celloxide 2021P | 13.3 | 12.6 | 11.6 | 12.6 | 12.6 | 13.7 | 12.6 |
| | Loxiol G71s | 1.1 | 1.1 | 1.1 | 1.1 | 1.1 | 1.1 | 1.1 |
| | Nubian Black TN-870 | 1.0 | 2.5 | 5.0 | | | | |
| | Oil Black 860 | | | | 2.5 | | | |
| | Valifast 3820 | | | | | 2.5 | | |
| | Monarch 460 | | | | | | | 2.5 |
| 2^{nd} Component | 1-MI | 1.0 | 1.0 | 1.0 | 1.0 | 1.0 | 1.0 | 1.0 |
| | MHHPA NC | 45.9 | 45.0 | 43.7 | 45.1 | 45.1 | 46.5 | 45.1 |

For each component, the individual ingredients were loaded into separate compartments of a 600mISpeedmixer^{®} cups and mixed for 5 minutes at 800rpm under a vacuum of 20mbar. Afterwards the two components of each composition were loaded together into one 600ml Speedmixer^{®} cup and mixed for 5 minutes at 800rpm under a vacuum of 20mbar. The mixture was afterwards poured into a metal mold pre-heated to 120°C..

The curing condition for the compositions was 120°C for 10 minutes in an autoclave pressurized to 6bar. Afterwards the molded plate was demolded from the metal mold and further cured in an oven 180°C for 1 hour.

The following tests were performed on the exemplified cured compositions:
Glass Transition Temperature (Tg,°C): The determination of glass transition temperatures (T_{g}) was conducted by dynamic mechanical thermal analysis (DMTA) in accordance with ASTM E1640: *DMA Testing: Standard Test Method for Assignment of the Glass Transition Temperature By Dynamic Mechanical Analysis.*
Fracture Toughness (MPa·m^{1/2}): The Plane Strain Fracture Toughness (K1c) was determined in accordance with standard ISO 13586: 2018 *Plastics - Determination of fracture toughness (GIC and KIC) - Linear elastic fracture mechanics (LEFM) approach.*
Viscosity (mPa.s): The viscosity was determined in accordance with standard ISO 3219-2: 2021 - *Rheology - Part 2: General principles of rotational and oscillatory rheometry*
Appearance: The appearance of the cured compositions and presence of milkiness or haziness was determined visually.

The results of the aforementioned tests are provided in Table 2.

**Table 2**

| **Tested Parameter** | **Example 1** | **Example 2** | **Example 3** | **Example 4** | **Example 5** | **Comparative Example 1** | **Comparative Example 2** |
|---|---|---|---|---|---|---|---|
| Viscosity of Component A, 60°C (mPa.s) | 416 | 512 | 766 | 569 | 513 | 333 | 800 |
| Glass Transition Temperature, Tg (°C) | 226 | 235 | 236 | | | 222 | 239 |
| K1c (MPa·m^{1/2)} | 1.2 | 1.2 | 1.2 | | | 1.2 | 1.2 |
| Appearance | Jet black, no milkiness or haziness | Jet black, no milkiness or haziness | Jet black, no milkiness or haziness | Jet black, no milkiness or haziness | Jet black, no milkiness or haziness | Yellowish, milky | Greyish black, milky |

In view of the foregoing description and examples, it will be apparent to those skilled in the art that equivalent modifications thereof can be made without departing from the scope of the claims.

## Claims

1. A two component (2K) composition comprising:
a first component comprising:
a1) at least one cycloaliphatic epoxide compound; and,
optionally a2) at least one elastomer modified epoxy resin; and,
a second component comprising:
b) at least one cyclic anhydride compound; and,
optionally c) at least one accelerator,
wherein the composition further comprises:
d) black pigment consisting of at least one organic compound; and,
e) toughener,
further wherein the composition is **characterized in that** the molar ratio of anhydride groups [-C(O)-O-C(O)-] to epoxide groups is from 0.5:1 to 1.5:1, for example from 0.8:1 to 1.2:1.

2. The two-component (2K) composition according to claim 1 comprising, based on the weight of the composition:
from 20 to 50 wt.% of a1) said at least one cycloaliphatic epoxide compound;
from 0 to 10 wt.% of a2) said at least one elastomer modified epoxy resin;
from 20 to 60 wt.% of b) said least one cyclic anhydride compound;
from 0 to 15 wt.% of c) said at least one accelerator;
from 0.1 to 10 wt.% of d) said black pigment; and,
from 1 to 30 wt.%, such as from 5 to 25 wt.% or from 10 to 20 wt.%, of e) said tougheners,
wherein the composition is **characterized in that** the molar ratio of anhydride groups [-C(O)-O-C(O)-] to epoxide groups is from 0.5:1 to 1.5:1, preferably from 0.8:1 to 1.2:1.

3. The two-component (2K) composition according to claim 1 or claim 2, wherein the or each cycloaliphatic epoxide compound has an epoxide equivalent weight of from 75 to 1000 g/eq., preferably from 100 to 500 g/eq. and more preferably from 100 to 250 g/eq.

4. The two-component (2K) composition according to any one of claims 1 to 3, wherein constituent a1) comprises at least one cycloaliphatic epoxide compound chosen from: bis-(3,4-epoxycyclohexylmethyl) oxalate; bis-(3,4-epoxy-cyclohexylmethyl) adipate; bis-(3,4-epoxy-6-methylcyclohexylmethyl) adipate; bis-(3,4-epoxycyclohexylmethyl) pimelate; 3,4-epoxycyclohexylmethyl-3,4-epoxycyclohexane carboxylate; bis-(3,4-epoxycyclohexyl) adipate; 3,4-epoxy-1-methylcyclohexylmethyl-3,4-epoxy-1-methylcyclohexane carboxylate; and, mixtures thereof.

5. The two-component (2K) composition according to any one of claims 1 to 4, wherein:
said first component further comprises a2) said at least one elastomer modified epoxy resin; and,
the or each elastomer modified epoxy resin of constituent a2) has an epoxide equivalent weight of from 200 to 2500 g/eq., preferably from 200 to 500 g/eq.

6. The two-component (2K) composition according to any one of claims 1 to 5, wherein b) said at least one cyclic anhydride compound is chosen from: hexahydrophthalic anhydride (HHPA); tetrahydrophthalic anhydride (THPA); methyltetrahydrophthalic anhydride (MTHPA); methylhexahydrophthalic anhydride (MHHPA); phthalic anhydride; trimellitic anhydride; and, mixtures thereof.

7. The two-component (2K) composition according to any one of claims 1 to 6, wherein:
said second component further comprises c) said at least one accelerator; and,
said at least one accelerator of constituent c) is chosen from imidazole; 1-methylimidazole; 2-methylimidazole; 2-ethylimidazole; 2-ethyl-4-methylimidazole; 2-undecylimidazole; 2-heptadecylimidazole; 2-phenylimidazole; 2-phenyl-4-methylimidazole; 2-phenyl-4,5-dihydroxymethylimidazole; 2-phenyl-4-methyl-5-hydroxymethylimidazole; 1-cyanoethyl-2-undecylimidazole; 1-cyanoethyl-2-ethyl-4-imidazole; 2-phenylimidazole; 1-benzyl-2-phenylimidazole; benzimidazole; 2-phenyl-4,5-dihydroxymethylimidazole; 2,3-dihydro-1H-pyrrolo [1,2-a] benzimidazole; 1-vinylimidazole N-(3-aminopropyl)imidazole; and, mixtures thereof.

8. The two-component (2K) composition according to any one of claims 1 to 7, wherein said composition is substantially free of carbon black.

9. The two-component (2K) composition according to any one of claims 1 to 8, wherein d) said black pigment is **characterized by**:
i) a median volume particle diameter (D_{V}50), as determined by dynamic light scattering, of from 10 to 500 nm; and / or,
ii) a surface area, as determined by Brunauer Emmett Teller (BET) nitrogen adsorption method, of from 10 to 500 m²/g.

10. The two-component (2K) composition according to any one of claims 1 to 9, wherein constituent e) comprises or consists of core shell rubber particles.

11. The two-component (2K) composition according to claim 10, wherein said core-shell rubber particles have a median volume particle size (Dv50) of from 10 to 300 nm, as measured via dynamic light scattering.

12. A method for producing a cured composition comprising the steps of:
i) providing a two-component (2K) composition as defined in any one of claims 1 to 11; and,
ii) curing the composition to obtain a cured composition.

13. The method according to claim 12, wherein step (i) further comprises introducing the two-component (2K) composition into a mold, in which mold are disposed either: fibers; or, a semi-finished fiber product chosen from a prewoven, a preform or a combination thereof.

14. The method according to claim 12 or claim 13, wherein step ii) comprises heating the composition at a temperature in the range of from 20°C to 250°C for a duration of from 1 to 60 minutes.

15. The cured composition obtained in accordance with the method defined in any one of claims 12 to 14.
